# EUROPÄISCHE PATENTANMELDUNG

(11) **EP 1 048 212 A2**
(43) Veröffentlichungstag der Anmeldung: **02.11.2000**
(21) Anmeldenummer: 00108237.9
(22) Anmeldetag: 14.04.2000
(51) Int. Cl.: A21D 2/00, A21D 10/00

(54) **Pumpfähiger Backzusatz**

(30) Priorität: 29.04.1999 DE 19919195
(71) Anmelder: FUCHS GmbH & Co., 49326 Melle (DE)
(72) Erfinder: Fuchs, Dieter, 49426 Melle (DE); Vicomte van Aefferden, Baudouin, Dr., 49201 Dissen (DE)
(74) Vertreter: Cohausz & Florack

(57) **Zusammenfassung**

Ein pumpfähiger Backzusatz zur Verbesserung der Qualität von Backwaren mit einer Viskosität von mindestens etwa 500 mPas⁻¹ und einer Wasseraktivität (a_{W}) von etwa ≤ 0,94 ist über mehrere Wochen ohne Kühlung physikalisch und mikrobiell stabil.

## Beschreibung

Die Erfindung betrifft einen pumpfähigen Backzusatz oder Backmittel zum Einsatz in der Backindustrie sowie ein Verfahren zur Herstellung von Backwaren unter Verwendung dieses Mittels.

Zur Herstellung von Backwaren werden neben Mehl, Salz und Hefe in der Regel weitere Backverbesserungszutaten (Backzusätze) mit Wasser zu einer homogenen Masse geknetet, diese dem Gärprozeß zugeführt, anschließend portioniert und dann gebacken.

Die sensorischen Eigenschaften und die Entwicklung des Backvolumens werden maßgeblich durch Backzusätze und den Fermentationsablauf beeinflußt. Die Geschmacksbildung optimierende Zusätze können staubig, pulvrig, klebrig, viskos oder in den seltensten Fällen flüssig sein. Die Anzahl der Backzutaten, deren Abwiegen und Dosierung sowie die Reinhaltung aller verwendeten apparativen Einrichtungen stellen eine Herausforderung für einen kontinuierlichen Produktionsablauf dar.

Seit einiger Zeit werden deshalb in größeren Backbetrieben fertige Zutatenmischungen eingesetzt. So beschreibt die WO 96/13980 einen flüssigen Backzusatz in Form einer wäßrigen Suspension, die bis zu 40% (GV) an Substanzen enthält, die den Geschmack der Backware beeinflussen sollen. Dieser pumpfähige Backzusatz enthält mithin mindestens 60% Wasser und wird beispielsweise in Containern an Großbäckereien geliefert. Solche flüssigen Backzusätze besitzen aber nur eine geringe Haltbarkeit, weil schon kurze Zeit nach dem Vermischen der Bestandteile mit Wasser eine Phasentrennung erfolgt, wobei Dreisphasensysteme gebildet werden können. Es wurde deshalb auch vorgeschlagen, diesen Backzusatz in mit Rühreinrichtungen ausgestatteten Containern zu liefern. Aber auch die mikrobiologische Stabilität dieses Produkts ist nicht zufriedenstellend, so daß dieser Backzusatz selbst unter Kühlung nur kurze Zeit mikrobiologisch unbedenklich ist.

Der Erfindung liegt deshalb die Aufgabe zugrunde, einen Backzusatz bereitzustellen, der einerseits pumpfähig ist, anderseits aber homogen und mikrobiologisch stabil über einen langen Zeitraum bleibt.

Gelöst wird diese Aufgabe durch einen Backzusatz (Backmittel) mit einer Viskosität von mindestens 500mPas⁻¹ und einer Wasseraktivität (a_{W}) von etwa ≤ 0,94. Gegenstand der Erfindung ist ferner ein Backverfahren unter Verwendung des erfindungsgemäßen Backzusatzes.

Die dynamische Viskosität wurde mit einem Rotations-Viskosimeter ermittelt, das nach dem Searle-Prinzip arbeitet. Die Wasseraktivität (a_{W}) ist der Quotient aus dem Wasserdampfdruck über dem Substrat und dem Dampfdruck reinen Wassers bei gleicher Temperatur. Sie kann mit dem Gerät Aqualab CX2 bestimmt werden.

Eine Wasseraktivität (a_{W}) von ≤ 0,94 allein kann zwar mikrobiologische Stabilität des Produkts gewährleisten, sichert aber nicht dessen physikalische Stabilität. Es war überraschend, daß die Viskosität des Backzusatzes die Trennung von Festbestandteilen, wäßrigen und/oder öligen Bestandteilen und damit die Bildung eines Dreiphasen- oder Zweiphasensystems verhindert und der Backzusatz trotzdem pumpfähig bleibt. Die physikalische und die mikrobiologische Stabilität des erfindungsgemäßen Backzusatzes bleiben über einen langen Zeitraum ohne Kühlung erhalten.

Gemäß einer bevorzugten Ausführungsform der Erfindung beträgt die Wasseraktivität (a_{W}) des Backzusatzes etwa 0,7 bis 0,8. Der Gesamtwassergehalt des erfindungsgemäßen Backzusatzes beträgt höchstens etwa 50 Gew.%, bezogen auf das Gewicht des Backzusatzes.

Gemäß einer weiteren bevorzugten Ausführungsform der Erfindung weist der flüssige Backzusatz einen pH-Wert von etwa ≤ 4,5, besonders bevorzugt von etwa 2,0 bis 3,5 und idealerweise um etwa 2,5 auf. Auch die Einstellung dieses pH-Wertbereichs fördert die mikrobiologische Stabilität des Backzusatzes.

Bestandteile des erfindungsgemäßen Backzusatzes können die üblicherweise in der Lebensmitteltechnologie verwendeten Verdickungsmittel, Getreideerzeugnisse, Zuckerstoffe, Milcherzeugnisse, Salz, Eierzeugnisse, Speisefette und Speiseöle, Lebensmittelzusatzstoffe gemäß Zusatzstoff-Zulassungsverordnung, Aromastoffe und Enzyme sein.

Geeignete Verdickungsmittel sind beispielsweise Stärke, Gelatine, Agar-Agar, Pektinprodukte, Guarmehl, Johannisbrotkernmehl und Xanthane. Besonders bevorzugt sind Hyrodrokolloide. Die Konzentration der Verdickungsmittel wird so gewählt, daß letztendlich die erfindungsgemäß gewünschte Viskosität erzielt wird. Sie kann vorzugsweise 1 bis 10 Gew.% betragen.

Geeignete Zuckerstoffe sind Mono- und Disaccharide, beispielsweise Glucose, Maltose, Fructose, Manose, Saccharose, Lactose, Maltodextrine und Invertzucker. Sie können zur Herstellung des erfindungsgemäßen Backzusatzes in Form von Pulvern, Lösungen, insbesondere Sirupen, zugesetzt werden. Die Konzentration der Zuckerstoffe im Backzusatz kann bis zu 25 Gew.%, vorzugsweise 5 bis 10 Gew.%, bezogen auf das Gewicht des Backzusatzes, betragen.

Der Backzusatz kann Milcherzeugnisse enthalten. Geeignete Milcherzeugnisse umfassen Vollmilchpulver, Magermilchpulver, Buttermilchpulver, Joghurtpulver, Quarkpulver, Molkenpulver und Milcheiweiß. Diese Bestandteile dienen der Verfeinerung der Gebäckkrume, der Geschmacksabrundung und der Nährwertanreicherung.

Als Speisefette und Speiseöle können solche pflanzlicher oder tierischer Herkunft eingesetzt werden. Ihr Anteil an dem erfindungsgemäßen Backzusatz beträgt höchstens 40 Gew.%, vorzugsweise 3 bis 10 Gew.%.

Für den erfindungsgemäßen Zweck geeignete Lebensmittelzusatzstoffe gemäß Zusatzstoff-Zulassungsverordnung sind beispielsweise Calciumsalze wie Calciumcarbonat, Calciumoxid, Calciumphosphate, Calciumsulfat, Natrium- und Kaliumchlorid, Alkalisulfate oder Alkalihydrogensulfate, Ammoniumsulfat, Ammoniumchlorid, Säuren und deren Additionssalze wie Sorbinsäure, Essigsäure, Propionsäure, Milchsäure und Calciumlactat, Äpfelsäure, Fumarsäure, Weinsäure, Citronensäure, Ascorbinsäure, Aminosäuren wie L-Cystein.

Die Konzentration der Säuren sowie der den pH-Wert beeinflussenden Salze wird vorzugsweise so gewählt, daß der zuvor angegebene pH-Wertbereich eingestellt wird. Ferner können als Emulgatoren wirkende Substanzen enthalten sein. Solche sind beispielsweise Mono- und Diglyceride von Speisefettsäuren, Lecithin, Diacetylweinsäureglyceride und deren Gemische.

Weitere Bestandteile des erfindungsgemäßen Backzusatzes können sein Ballaststoffe wie Weizenfasern, Sojaschalen, Weizen-, Gersten- und Haferkleie, Aromastoffe wie Maltol und Malzextrakt. Hefe kann in dem Backzusatz enthalten sein, vorzugsweise ist jedoch keine Hefe enthalten.

Enzyme, die in dem erfindungsgemäßen Backzusatz enthalten sein können, sind insbesondere Amylasen, Proteasen und Lipoxygenasen.

Zur Herstellung des erfindungsgemäßen Backzusatzes werden die Bestandteile mit Ausnahme der Emulgatoren, Enzyme, Wasser und anderer wärmeempfindlicher Substanzen unter Erwärmen auf beispielsweise 80 bis 95°C vermischt. Nach Abkühlen des Gemischs auf etwa 60°C werden Wasser, Emulgatoren, Öl und anschließend Vitamine, Enzyme oder andere labile Proteine oder Protein enthaltende Zutaten zugesetzt. Während der Zugabe der weiteren Zutaten oder anschließend kann das erhaltene Gemisch homogenisiert werden.

Ein erfindungsgemäßer Backzusatz kann beispielsweise 0,5 bis 10 Gew.% Verdickungsmittel, 1,0 bis 10 Gew.% Säuren oder Mineralien, 5 bis 30 Gew.% Zuckerstoffe, 0 bis 40 Gew.% Speisefette oder Speiseöle, 3 bis 5 Gew.% Emulgatoren, 10 bis 15 Gew.% Malzextrakt und 20 bis 45 Gew.% Wasser, jeweils bezogen auf das Gesamtgewicht des Backzusatzes, enthalten. Vorzugsweise sind etwa 0,2 Gew.% Antioxidans, beispielsweise Ascorbinsäure, und etwa 0,005 Gew.% Cystein, jeweils bezogen auf das Gesamtgewicht des Backzusatzes, enthalten.

Zur Herstellung von Backwaren wird der erfindungsgemäße Backzusatz mit Mehl vermischt und anschließend Hefe, Salz und Wasser hinzugegeben. Man läßt den Teig gären, portioniert den Teig und backt ihn zu dem gewünschten Produkt in bekannter Weise.

Die Erfindung wird anhand der folgenden beispielhaften Rezepturen und deren Herstellung weiter erläutert.

### Beispiel 1

Ein Backzusatz gemäß Rezeptur 1 wurde hergestellt. Alle Zutaten mit Ausnahme derjenigen der Positionen 1 bis 4 und 9 wurden vermischt und unter Rühren zum Kochen gebracht. Nach Abkühlen auf etwa 60°C wurden die übrigen Zutaten hinzugerührt. Beim anschließenden weiteren Abkühlen wurde das Gemisch homogenisiert und anschließend in Kanister abgefüllt.

Der pH-Wert des erhaltenen Backzusatzes beträgt 2,5, die Wasseraktivität (a_{W}) ist 0,94. Die Viskosität beträgt 14.250 mPas⁻¹. Gemessen wurde mit dem Viskosimeter Haake Viskotester VT5l/R, Spindel R3, bei 20 °C, 4t/min, 90 Sekunden.

| | **Rezeptur 1 - Bestandteile** | **Anteile (%)** |
|---|---|---|
| 1 | Emulgatorgemisch | 6,71 |
| 2 | Amylase | 0,39 |
| 3 | Lecithin | 3,61 |
| 4 | Ascorbinsäure | 0,23 |
| 5 | Calciumpyrophosphat | 0,27 |
| 6 | Malzextrakt | 13,55 |
| 7 | Glucosesirup | 4,52 |
| 8 | Aromastoff | 0,015 |
| 9 | Sojaöl | 4,52 |
| 10 | Wasser | 40,66 |
| 11 | Calciumsulfat | 2,26 |
| 12 | Cystein | 0,005 |
| 13 | Zucker | 10,84 |
| 14 | Dextrose | 2,26 |
| 15 | Lactose | 7,09 |
| 16 | Stärke | 2,62 |
| 17 | Guarkernmehl | 0,45 |
| | | Σ 100,00 |

### Beispiel 2

Ein Backzusatz gemäß Rezeptur 2 wurde hergestellt. Alle Zutaten mit Ausnahme derjenigen der Positionen 1 bis 4 und 10 wurden vermischt und unter Rühren zum Kochen gebracht. Nach Abkühlen auf etwa 60°C wurden die übrigen Zutaten hinzugerührt. Beim anschließenden weiteren Abkühlen wurde das Gemisch homogenisiert und anschließend in Kanister abgefüllt.

Der pH-Wert des erhaltenen Backzusatzes beträgt 2,5, die Wasseraktivität (a_{W}) ist 0,94. Die Viskosität beträgt 6.300 mPas⁻¹. Gemessen wurde mit dem Viskosimeter Haake Viskotester, Spindel R4, bei 20 °C, 4t/min, 90 Sekunden.

| | **Rezeptur 2 - Bestandteile** | **Anteile (%)** |
|---|---|---|
| 1 | Emulgatorgemisch | 6,7 |
| 2 | Amylase | 0,387 |
| 3 | Lecithin | 3,61 |
| 4 | Ascorbinsäure | 0,23 |
| 5 | Calciumpyrophosphat | 0,27 |
| 6 | Malzextrakt | 13,53 |
| 7 | Glucosesirup | 4,51 |
| 8 | Zucker | 10,82 |
| 9 | Dextrose | 2,25 |
| 10 | Sojaöl | 4,51 |
| 11 | Wasser | 42,8551 |
| 12 | Calciumsulfat | 2,25 |
| 13 | Lactose | 7,08 |
| 14 | Cystein | 0,0045 |
| 15 | Hydrokolloide | 0,99 |
| 16 | Aroma | 0,0034 |
| Σ | | **100,00%** |

### Beispiel 3

Ein Backzusatz gemäß Rezeptur 3 wurde hergestellt. Alle Zutaten mit Ausnahme derjenigen der Positionen 1 bis 4 und 9 wurden vermischt und unter Rühren zum Kochen gebracht. Nach Abkühlen auf etwa 60°C wurden die übrigen Zutaten hinzugerührt. Beim anschließenden weiteren Abkühlen wurde das Gemisch homogenisiert und anschließend in Kanister abgefüllt.

Der pH-Wert des erhaltenen Backzusatzes beträgt 2,7, die Wasseraktivität (a_{W}) ist 0,71. Die Viskosität beträgt 6.610 mPas⁻¹. Gemessen wurde mit dem Viskosimeter Haake Viskotester, Spindel R4, bei 20 °C, 4t/min, 90 Sekunden.

| | **Rezeptur 3 - Bestandteile** | **Anteile (%)** |
|---|---|---|
| 1 | Emulgatorgemisch | 5,374 |
| 2 | Amylase | 0,31 |
| 3 | Lecithin | 2,89 |
| 4 | Ascorbinsäure | 0,18 |
| 5 | Calciumpyrophosphat | 0,22 |
| 6 | Malzextrakt | 10,84 |
| 7 | Glucosesirup | 3,61 |
| 8 | Zucker | 8,67 |
| 9 | Dextrose | 1,81 |
| 10 | Sojaöl | 3,61 |
| 11 | Wasser | 34,33 |
| 12 | Calciumsulfat | 1,81 |
| 13 | Lactose | 5,67 |
| 14 | Cystein | 0,0036 |
| 15 | Hydrokolloide | 0,7973 |
| 16 | Speisesalz | 19,8751 |

## Patentansprüche

1. Pumpfähiger Backzusatz mit einer Viskosität von mindestens etwa 500 mPas⁻¹ und einer Wasseraktivität (a_{W}) von etwa ≤ 0,94.

2. Backzusatz nach Anspruch 1, **dadurch gekennzeichnet,** daß die Wasseraktivität (a_{W}) etwa 0,7 bis 0,8 beträgt.

3. Backzusatz nach Anspruch 1 oder 2, **dadurch gekennzeichnet,** daß der pH-Wert des Backzusatzes ≤ etwa 4,5 ist.

4. Backzusatz nach Anspruch 3, **dadurch gekennzeichnet,** daß der pH-Wert des Backzusatzes etwa 2,0 bis 3,5 beträgt.

5. Verfahren zur Herstellung von Backwaren, **dadurch gekennzeichnet,** daß man Mehl mit einen Backzusatz nach einem der Ansprüche 1 bis 4 mischt und anschließend das Gemisch in bekannter Weise weiterbehandelt.
